# EUROPEAN PATENT SPECIFICATION

(11) **EP 0 687 655 B1**
(45) Date of publication and mention of the grant of the patent: **12.08.1998**
(21) Application number: 95109329.3
(22) Date of filing: 16.06.1995
(51) Int. Cl.: C04B 28/02

(54) **A cement mortar composition and articles produced therefrom**
Zementmörtelzusammensetzung und daraus hergestellte Gegenstände
Composition d'un mortier de ciment et articles obtenus à partir de cette composition

(30) Priority: 17.06.1994 IT TO940506
(43) Date of publication of application: 20.12.1995
(73) Proprietor: UNICEM S.p.A., 15033 Casale Monferrato (Alessandria) (IT)
(72) Inventor: Curcio, Francesco, I-00189 Roma (IT); Gallo, Armando, I-00142 Roma (IT); De Angelis, Bernardo, I-00156 Roma (IT)
(74) Representative: Gerbino, Angelo

(56) References cited:
- EP-A- 0 273 181
- EP-A- 0 451 014
- WO-A-92/02469
- CH-A- 678 524
- GB-A- 2 062 605
- US-A- 4 921 537
- CHEMICAL ABSTRACTS, vol. 114, no. 6, 11 February 1991 Columbus, Ohio, US; abstract no. 48529d, C. NISHIOKA ET AL. page 347; & JP-A-02 136 202 (ID.)
- CHEMICAL ABSTRACTS, vol. 118, no. 4, 25 January 1993 Columbus, Ohio, US; abstract no. 26621h, S. KODA ET AL. page 291; & JP-A-04 209 737 (ID.)

## Description

The present invention relates to a cement mortar composition for producing articles, such as, in particular, dies for shaping plates, for example, of plastics or composite material or metal sheet and to articles produced in this manner.

In many areas of industry, and in the motor vehicle industry in particular, dies are used for drawing metal sheets into a desired shape so as to form, for example, bodywork parts and various motor vehicle components.

Steel dies are usually used for mass production even though they are very expensive. In fact, they have adequate mechanical strength and their cost is suitably spread over a large number of parts produced.

On the other hand, materials other than steel are used for dies used for producing small series of parts and for those used for performing tests, which are modified and/or remade several times, in order to reduce the cost and enable the die to be prepared more rapidly.

Among the latter materials there can be listed low-melting metal alloys, thermosetting resins, which may possibly be reinforced, and cement mortars.

With respect to the other materials, cement mortars have advantages in terms of cost, ease of working without developing substantial pollutants and the possibility of elimination without harmful consequences for the environment.

Cement mortars lend themselves well to this application since they are particularly resistant to the mechanical compressive stresses which are particularly prevalent in a die.

Tensile and bending stresses, which are also present in a die, can advantageously be absorbed by providing adequate reinforcement, for example of metal or polymer material.

The object of the present invention is to provide a cement mortar composition which is suitable for the production of articles such as, in particular, dies for shaping plates, which is inexpensive and easy to use and, at the same time, permits dies having adequate mechanical strength to be produced.

This object is achieved by a cement mortar composition comprising, in the quantities defined by the following weight percentages:
- cement 20-50%
- expanding agent 1-10%
- dispersing agent 0.5 to 2%
- de-aerating agent 0.5-1.5%
- sand 30-70%
- calcareous filler 1-10%.

In order to produce a shaped article, such as, for example, a die, from a cement mortar composition according to the invention, a mixture of the latter is prepared with water, the mixture is then agitated for a suitable length of time, it is then poured into a mould which reproduces the shape of the die which is to be produced, and the mixture is left to harden.

It has been discovered by experiment that a compressive strength according to the European standard CEN EN 196/1 of at least 50 N/mm² is attained using the mortar composition of the invention and this is sufficient for forming operations in conditions which are not extreme. This strength can be attained in a short time (between 1 and 3 days after casting) even at ambient temperature.

The composition according to the invention has the particular advantage that, once mixed with water, it assumes high fluidity which is maintained for a length of time sufficient to enable it to be used.

The mixture of water and cement mortar according to the invention can thus be cast in complex moulds by filling them sufficiently, without the need to subject it to particular mechanical stresses, such as shaking, vibrations and the like, except in order to expel any air bubbles remaining entrapped against the walls.

If the cement mortar according to the invention is used for producing dies comprising a metal reinforcement, it has the further advantages of having a high degree of adhesion to the metal and of not tending to shrink, ensuring optimum cohesion with the frame, once hardened.

It is possible to use any type of cement, whether it is based on Portland clinker or is aluminous, in the mortar composition according to the invention. Preferably, a cement of the high-strength type is used, for example of the 42.5 N/mm² or 52.5 N/mm² type, as defined by the European standard CEN ENV 197/1.

The role of the expanding agent is to eliminate hydraulic shrinkage, which, if it is not compensated, can cause flaws and changes in the dimensions of the die.

Preferably, a calcium sulphoaluminate or calcium oxide-based product is used for this purpose.

The role of the dispersing agent is to reduce the amount of water to be added to the cement mortar composition which, if it is too high, would compromise the mechanical properties of the articles produced from the mixture.

Preferably, to this end, a product based on a calcium or sodium salt of naphthalene sulphonate condensed with formaldehyde or based on melamine or on acrylic polymers or copolymers is used.

The function of the de-aerating agent is to reduce drastically and, if possible, eliminate the formation of air bubbles when the mortar is mixed with the water and when the mixture is subsequently cast.

Preferably, an alluvial siliceous-type sand having granules with a maximum diameter of up to 4 mm and, more preferably, of up to 1 mm is used in the composition according to the invention.

This sand has the advantage of being compact and of being formed of rounded granules so as to reduce the amount of water with which it has to be mixed, and of having high resistance to impact and wear. Moreover, the above grain size improves the characteristics of fluidity and cohesion of the fresh mortar.

According to another preferred embodiment of the invention the sand is of the alluvial siliceous type with 1 to 50% by weight of granules with a maximum diameter of up to 0.5 mm and 99 to 50% by weight of granules with a diameter comprised between 0.5 and 4 mm.

The function of the calcareous filler is to improve the rheological properties of the composition of the fresh mortar, to impart a compact surface to the hardened mortar and possibly to accelerate the development of mechanical strength. The filler preferably consists of powdered calcium carbonate in the form of granules having a maximum diameter of 90 µm, of which at least 50% have a diameter of less than 20 µm.

As an alternative to the use of cement and of a calcareous filler as separate ingredients in the composition of the invention, it is possible to use a limestone Portland cement (for example of the type defined by the European standard CEN ENV 197/1) which already contained these two ingredients in a ratio which is within the range defined by the composition of the present invention.

A further object of the present invention is an article, in particular a die for shaping plates, produced following the preparation of a mixture from water and a cement mortar composition as indicated above, the pouring of the mixture into a mould corresponding to that of the desired article and the setting of this mixture.

Preferably, the above mixture is obtained by mixing 100 parts by weight of cement mortar composition with 8-22, or more preferably 10-17, parts by weight of water.

In this manner, articles which can assume a strength of at least 50 N/mm² according to the European standard CEN EN 196/1 are obtained at the latest within 3 days after casting and preferably within one or two days after casting.

By virtue of their particular composition, the articles produced from the cement mortar of the invention are further free from surface defects and are thus particularly suitable for use as dies.

These articles can be produced by casting the mixture of mortar and water into a temporary formwork made of wood, plastic material or metal, or into a permanent metal formwork. The latter facilitates the successive movements of the articles, such as, for example, the anchorage of the press to the frame if dies are involved.

The articles produced according to the invention can be formed of one or more parts, possibly reinforced by a continuous metal reinforcement and/or a reinforcement which is diffused with metal, vegetable or polymer fibres buried in the set mortar.

Furthermore, the surfaces of the dies produced according to the invention which are intended to be in contact with the plates to be shaped can be covered with a coating layer which is at least 0.1 mm thick and preferably less than 30 cm thick.

This coating layer can, for example, be made of metal, reinforced polymer material or a cement material which is different from that of the compositions described above.

Further advantages and characteristics of the present invention will become clear from the following embodiments and from the appended sheets of drawings which are provided by way of non-limiting and in which:
- Figure 1 is a schematic perspective view of a die produced from a cement mortar composition according to the invention; and
- Figure 2 is a schematic perspective view of a further die produced from a cement mortar composition according to the invention.

### Example 1

A dry, premixed mortar which is ready for use is prepared and has the following composition given as weight percentages:

| | |
|---|---|
| Portland cement CEM I 52.5R | 50.0% |
| DILACON^{R} | 5.0% |
| calcareous filler | 10.0% |
| naphthalene sulphonate FLUBE^{R} CR 140 | 2.0% |
| de-aerating additive PDN | 1.0% |
| silica having a maximum diameter of 0.5 mm | 32.0% |

DILACON (registered trade mark) is a calcium sulphoaluminate-based expanding agent produced by ENICHEM.
FLUBE (registered trade mark) CR 140 is a dispersing agent produced by the Bozzetto company.
PDN is a de-aerating agent sold by the Addiment company.
Portland cement CEM I 52.5R is produced by Unicem.

The mortar having this composition is mixed for four minutes in a high-speed mixer with 20 weight % of water. A homogeneous paste is obtained which is totally depleted ofsegregations, is very fluid, has an only slightly viscous appearance, and which, after 30 minutes, has the same properties almost completely unchanged. The following measurements are taken using standard test methods:

| | |
|---|---|
| spreading (UNI 7044) | > 200% |
| density (CEN prEN 1015-6) | 2203 kg/m³ |
| content of air (CEN prEN 1015-7) | 0.7% |
| compressive strength after 1 day | 41.7 N/mm² |
| compressive strength after 3 days | 73.0 N/mm² |

The compressive strength is measured on 40x40x160 mm test pieces made and cured according to the provisions of the standard CEN EN 196/1.

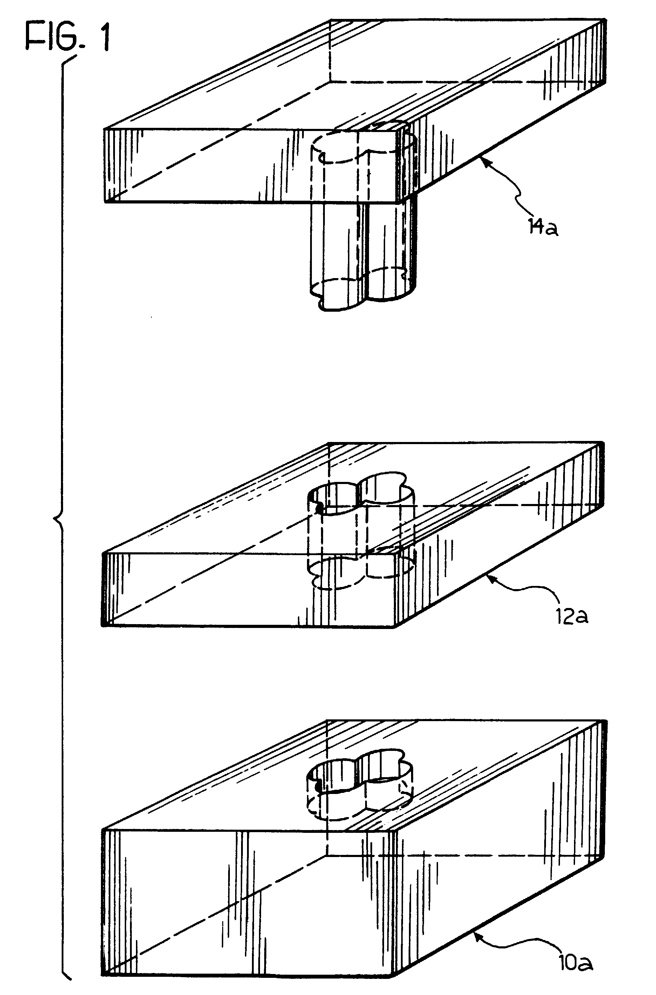

A die illustrated in Figure 1 is produced with the mortar having this composition. This die consists of three parts, a matrix 10a, a blank holder 12a and a punch 14a respectively, and it can impress a cross shape on a plate in particular a metal sheet.

The parts 10a, 12a and 14a have a continuous metal reinforcement, not illustrated in Figure 1 and produced by known methods which imply the use of cages and rods welded to one another.

The die is used a number of times, producing a consistent number of impressions each of which is approximately 20 mm deep. The mechanical behaviour of all three parts 10a, 12a, 14a is highly satisfactory. The metal sheet is also drawn in a uniform manner. The surfaces of the die which are in contact with the metal sheet are lubricated with powdered graphite. Various types of metal sheet are used, including 1 mm thick stainless steel sheet.

### Example 2

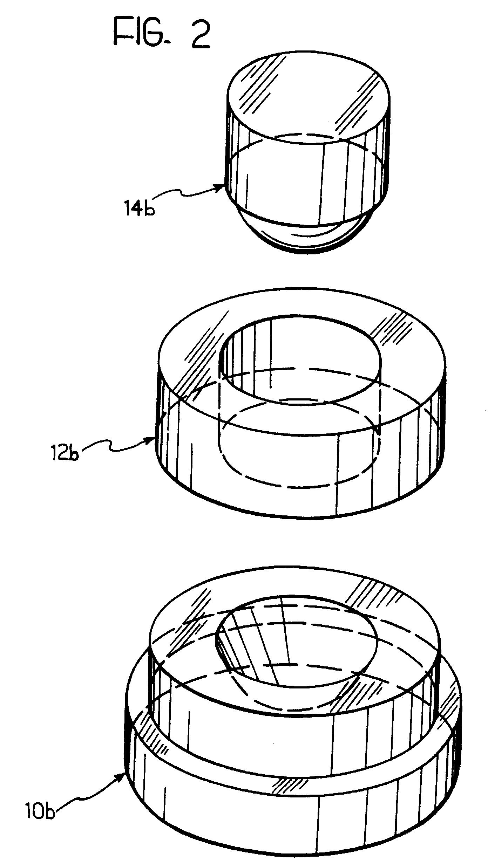

A die illustrated in Figure 2 is produced with the same premixed mortar described in Example 1. This die is formed of three parts, a matrix 10b, a blank holder 12b and a punch 14b respectively, and can draw a metal sheet into a shape which faithfully reproduces the parabola of a motor vehicle headlight. The casting process is performed according to the operating procedure described in Example 1.

The parts 10b, 12b and 14b have a continuous metal reinforcement not illustrated in Figure 2 and produced by known methods which imply the use of cages and rods welded to one another.

When the three parts 10b, 12b, 14b are demoulded, it can be noted that the mortar gives smooth surfaces free from visible defects, as already seen in the die described in Example 1.

Numerous forming tests have been performed, following which some examples of parabola have been produced in a satisfactory manner, both from the point of view of the drawing of the metal sheet and of the mechanical behaviour of the die.

### Example 3

A dry premixed mortar ready for use is prepared according to the following composition given as weight percentages:

| | |
|---|---|
| Portland cement CEM I 52.5 | 35.0% |
| DILACON^{R} | 4.2% |
| calcareous filler | 4.9% |
| naphthalene sulphonate FLUBE^{R} CR 140 | 1.4% |
| de-aerating additive PDN | 1.0% |
| silica sand with a maximum diameter of 1 mm | 53.5% |

The mortar having this composition is mixed according to the procedure described in Example 1 with 16.5% of water, obtaining a fresh mortar having rheological characteristics judged suitable for the construction of dies on the basis of the evaluation criteria defined in the preceding examples.

The following measurements were taken using the test methods cited in Example 1:

| | |
|---|---|
| spreading | > 200% |
| density | 2210 kg/m³ |
| air content | 0.5% |
| compressive strength after 1 day | 41.3 N/mm² |
| compressive strength after 2 days | 55.4 N/mm² |
| compressive strength after 3 days | 61.8 N/mm² |
| compressive strength after 7 days | 65.2 N/mm² |
| compressive strength after 28 days | 80.5 N/mm² |

The mortar is used for preparing the three parts 10b, 12b, 14b of which the die according to Figure 2 is composed, according to the procedure described in Example 2. The die is used satisfactorily in repeated metal sheet forming tests and does not give rise to cracking phenomena due to hydraulic shrinkage.

### Example 4

A dry premixed mortar ready for use is prepared according to the following composition given as weight percentages:

| | |
|---|---|
| Portland cement CEM I 52.5 | 25.5% |
| DILACON | 3.0% |
| calcareous filler | 5.0% |
| naphthalene sulphonate FLUBE CR 140 | 1.0% |
| de-aerating additive PDN | 1.0% |
| silica sand with maximum diameter of 0.5 mm | 23.0% |
| silica sand with maximum diameter of 4 mm | 42.0% |

By adding to this composition 11% of its weight of water according to the procedure of Example 1, a mortar of suitable rheological behaviour is obtained. The following properties were measured by using the test methods cited in Example 1:

| | |
|---|---|
| spreading | 200% |
| air content | 1.4% |
| compressive strength after 1 day | 43.2 N/mm² |
| compressive strength after 3 days | 67.4 N/mm² |
| compressive strength after 7 days | 76.5 N/mm² |
| compressive strength after 28 days | 83.5 N/mm² |

A die prepared with this mortar performed well in numerous forming tests on metal sheet.

## Claims

1. A cement mortar composition for producing articles, such as in particular dies for shaping plates, comprising, in the quantities defined by the following weight percentages:
- cement 20-50%
- expanding agent 1-10%
- dispersing agent 0.5 to 2%
- de-aerating agent 0.5-1.5%
- sand 30-70%
- calcareous filler 1-10%

2. A composition according to Claim 1, characterized in that the cement is of the type having high strength, of the 42.5 N/mm² or 52.5 N/mm² type, as defined by the European standard CEN ENV 197/1.

3. A composition according to either of the preceding claims, characterized in that the expanding agent is a calcium sulphoaluminate or calcium oxide-based product.

4. A composition according to any one of the preceding claims, characterized in that the dispersing agent is a product based on a calcium or sodium salt of naphthalene sulphonate condensed with formaldehyde or based on melamine or on acrylic polymers or copolymers.

5. A composition according to any one of the preceding claims, characterized in that the sand is of the alluvial siliceous type and has granules with a maximum diameter of up to 4 mm and preferably up to 1 mm.

6. A composition according to any one of the preceding claims 1 to 4, characterized in that the sand is of the alluvial siliceous type with 1 to 50% by weight of granules with a maximum diameter of up to 0.5 mm and 99 to 50% by weight of granules with a diameter comprised between 0.5 and 4 mm.

7. A composition according to any one of the preceding claims, characterized in that the calcareous filler consists of powdered calcium carbonate in the form of granules having a maximum diameter of 90 µm, of which at least 50% have a diameter of less than 20 µ.

8. An article, in particular a die for shaping plates, produced following the preparation of a mixture from water and those cement mortar compositions according to any one of the preceding claims, the casting of the mixture in a mould corresponding to that of the desired article, and the setting of the mixture.

9. An article according to Claim 8, characterized in that the mixture is obtainable by mixing 100 parts by weight of cement mortar composition with 8-22, preferably 10-17, parts by weight of water, the set mixture constituting the article having a compressive strength of at least 50 N/mm² according to the European standard CEN EN 196/1 at the latest within three days after casting and preferably within one or two days after casting.

10. An article according to either of Claims 8 and 9, characterized in that the mixture is cast in a metal formwork which can facilitate the subsequent movement of the article.

11. An article according to any one of the preceding claims 8 to 10, characterized in that it is formed from one or more parts, reinforced with a continuous metal reinforcement and/or a reinforcement diffused with metal, vegetable or polymer fibres buried in the set mortar.

12. An article, in particular a die, according to any one of the preceding Claims 8 to 11, characterized in that its surfaces which are to contact the plates to be shaped are covered with a coating layer which is of at least 0.1 mm thick and preferably less than 30 cm thick.

13. An article according to Claim 12, characterized in that the coating layer is metal, reinforced polymer material or a cement material which is different from that obtained from the composition according to claims 1 to 7.

## Patentansprüche

1. Zementmörtelverbindung für die Herstellung von Gegenständen, im besonderen beispielsweise von Formen zur Formgebung von Platten, wobei die Verbindung in jenen Mengen, die durch die folgenden Gewichtsprozente festgelegt sind, enthält:
- Zement 20 - 50%
- Expandiermittel 1 - 10%
- Dispergiermittel 0,5 - 2%
- Entlüftungsmittel 0,5 - 1,5%
- Sand 30 - 70%
- Kalkfüllstoff 1 - 10%

2. Verbindung gemäß Anspruch 1, dadurch gekennzeichnet, daß der Zement eine hohe Festigkeit von 42,5 N/mm² oder 52,5 N/mm² besitzt, wie sie in der Europäischen Norm CEN ENV 197/1 festgelegt ist.

3. Verbindung gemäß jedem der bisherigen Ansprüche, dadurch gekennzeichnet, daß das Expandiermittel ein Calciumsulphoaluminat oder ein Produkt auf der Basis von Calciumoxyd ist.

4. Verbindung gemäß irgendeinem der bisherigen Ansprüche, dadurch gekennzeichnet, daß das Dispergiermittel ein Produkt auf der Basis eines Calcium- oder Natriumsalzes von Naphthalinsulphonat kondensiert mit Formaldehyd oder auf der Basis von Melamin oder von Akrylpolymeren oder Copolymeren ist.

5. Verbindung gemäß irgendeinem der bisherigen Ansprüche, dadurch gekennzeichnet, daß der Sand ein alluvialer Silikatsand ist, der eine Teilchengröße mit einem maximalen Durchmesser bis zu 4mm und vorzugsweise bis zu 1mm besitzt.

6. Verbindung gemäß irgendeinem der bisherigen Ansprüche 1 bis 4, dadurch gekennzeichnet, daß der Sand ein alluvialer Silikatsand mit 1 bis 50 Gewichtsprozenten mit einer Teilchengröße mit einem maximalen Durchmesser bis zu 0,5mm und mit 99 bis 50 Gewichtsprozenten mit einer Teilchengröße mit einem Durchmesser zwischen 0,5 und 4mm ist.

7. Verbindung gemäß irgendeinem der bisherigen Ansprüche, dadurch gekennzeichnet, daß der Kalkfüllstoff aus gepulvertem Calciumcarbonat in Form von Teilchen besteht, die einen maximalen Durchmesser von 90µm besitzen, von denen zumindest 50% einen Durchmesser unter 20µ besitzen.

8. Gegenstand, im besonderen eine Form zur Formgebung von Platten, wobei der Gegenstand wie folgt hergestellt wird:
Vorbereiten einer Mischung aus Wasser und den Bestandteilen eines Zementmörtels gemäß irgendeinem der bisherigen Ansprüche, Gießen der Mischung in eine Form, die der Form des gewünschten Gegenstands entspricht, und Aushärten der Mischung.

9. Gegenstand gemäß Anspruch 8, dadurch gekennzeichnet, daß die Mischung durch das Mischen von 100 Gewichtsteilen einer Zementmörtelverbindung mit 8 - 22, vorzugsweise mit 10 - 17, Gewichtsteilen Wasser hergestellt wird, wobei die ausgehärtete Mischung, die den Gegenstand formt, spätestens innerhalb von drei Tagen nach dem Guß und vorzugsweise innerhalb von ein oder zwei Tagen nach dem Guß eine Druckfestigkeit von zumindest 50 N/mm² gemäß der Europäischen Norm CEN EN 196/1 besitzt.

10. Gegenstand gemäß jedem der Ansprüche 8 und 9, dadurch gekennzeichnet, daß die Mischung in eine Metallform gegossen wird, mit der die darauffolgende Bewegung des Gegenstands erleichtert wird.

11. Gegenstand gemäß irgendeinem der bisherigen Ansprüche 8 bis 10, dadurch gekennzeichnet, daß der Gegenstand aus einem oder mehreren Teilen hergestellt wird, die mit einer durchgehenden Metallverstärkung und/oder einer Verstärkung versehen sind, die mit Metall-, Pflanzen- oder Polymerfasern durchsetzt ist, die in den ausgehärteten Mörtel eingebettet sind.

12. Gegenstand, im besonderen eine Form, gemäß irgendeinem der bisherigen Ansprüche 8 bis 11, dadurch gekennzeichnet, daß die Oberflächen des Gegenstandes, die mit den zu formenden Platten in Berührung treten sollen, mit einer Überzugsschicht bedeckt sind, die zumindest 0,1mm dick und vorzugsweise weniger als 30cm dick ist.

13. Gegenstand gemäß Anspruch 12, dadurch gekennzeichnet, daß die Überzugsschicht aus einem Metall, einem verstärkten Polymermaterial oder aus einem Zementmaterial besteht, das sich von jenem Material unterscheidet, das man mit der Verbindung gemäß Anspruch 1 bis 7 erhält.

## Revendications

1. Composition d'un mortier de ciment pour produire des articles tels que, en particulier, des matrices pour former des plaques, comprenant dans les quantités définies par les pourcentages en poids ci-après:
- ciment : 20 à 50 %
- agent d'expansion : 1 à 10 %
- agent de dispersion : 0,5 à 2 %
- agent de désaération : 0,5 à 1,5 %
- sable : 30 à 70 %
- charge calcaire : 1 à 10 %

2. Composition selon la revendication 1, caractérisée en ce que le ciment est du type présentant une forte résistance, du type 42,5 N/mm² ou 52,5 N/mm², comme défini par la norme européenne CEN ENV 197/1.

3. Composition selon l'une ou l'autre des revendications précédentes, caractérisée en ce que l'agent d'expansion est un sulfoaluminate de calcium ou un produit à base d'oxyde de calcium.

4. Composition selon l'une quelconque des revendications précédentes, caractérisée en ce que l'agent de dispersion est un produit à base d'un sel calcique ou sodique de naphtalène sulfonate condensé avec un formaldéhyde ou à base de mélamine ou de polymères ou copolymères acryliques.

5. Composition selon l'une quelconque des revendications précédentes, caractérisée en ce que le sable est du type siliceux alluvial et présente des granules d'un diamètre maximal ne dépassant pas 4 mm et de préférence ne dépassant pas 1 mm.

6. Composition selon l'une quelconque des revendications précédentes 1 à 4, caractérisée en ce que le sable est du type siliceux alluvial avec 1 à 50 % en poids de granules d'un diamètre maximal ne dépassant pas 0,5 mm et 99 à 50 % en poids de granules d'un diamètre compris entre 0,5 et 4 mm.

7. Composition selon l'une quelconque des revendications précédentes, caractérisée en ce que la charge calcaire se compose de carbonate de calcium pulvérulent sous la forme de granules présentant un diamètre maximal de 90 µm, dont au moins 50 % présentent un diamètre inférieur à 20 µm.

8. Article, en particulier une matrice pour former des plaques, produit suite à la préparation d'un mélange à partir d'eau et de ces compositions d'un mortier de ciment selon l'une quelconque des revendications précédentes, au coulage du mélange dans un moule correspondant à celui de l'article souhaité et au séchage du mélange.

9. Article selon la revendication 8, caractérisé en ce que le mélange peut être obtenu en mélangeant 100 parties en poids d'une composition d'un mortier de ciment avec 8 à 22, de préférence 10 à 17, parties en poids d'eau, le mélange séché constituant l'article présentant une résistance à la compression d'au moins 50 N/mm² selon la norme européenne CEN EN 196/1, au plus tard trois jours après le coulage et de préférence un ou deux jours après le coulage.

10. Article selon les revendications 8 ou 9, caractérisé en ce que le mélange est coulé dans un cadre métallique, ce qui peut faciliter le déplacement ultérieur de l'article.

11. Article selon l'une quelconque des revendications précédentes 8 à 10, caractérisé en ce qu'il est formé d'une ou plusieurs parties, renforcé par un renforcement métallique continu et/ou un renforcement diffusé avec des fibres métalliques, végétales ou polymères noyées dans le mortier séché.

12. Article, en particulier une matrice, selon l'une quelconque des revendications précédentes 8 à 11, caractérisé en ce que ses surfaces qui doivent contacter les plaques à former sont recouvertes d'une couche de revêtement qui est d'une épaisseur d'au moins 0,1 mm et de préférence inférieure à 30 cm.

13. Article selon la revendication 12, caractérisé en ce que la couche de revêtement est du métal, un matériau polymère renforcé ou un matériau de type ciment qui est différent de celui obtenu à partir de la composition selon les revendications 1 à 7.
